# EUROPEAN PATENT APPLICATION

(11) **EP 4 842 115 A1**
(43) Date of publication of application: **18.11.2026**
(21) Application number: 24922750.5
(22) Date of filing: 05.02.2024
(51) Int. Cl.: H04W 72/21, G06K 7/10, H04W 4/70

(54) **WIRELESS COMMUNICATION METHOD, COMMUNICATION DEVICE, APPARATUS, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN)
(74) Representative: Taor, Simon Edward William
(86) International application number: PCT/CN2024/076104
(87) International publication number: WO 2025/166504

(57) **Abstract**

A wireless communication method, a communication device, an apparatus, and a storage medium are provided. The wireless communication method includes the following. A first device receives a first command sent by a second device, where the first command contains a first parameter, and the first parameter is used to determine a first slot value. The first device sends a second parameter to the second device, where the second parameter is a target parameter for accessing the second device, and a transmission time for the second parameter is determined based on the first slot value. The second parameter is carried on a first uplink frequency-domain resource in multiple uplink frequency-domain resources, and each of the multiple uplink frequency-domain resources is available for carrying the target parameter.

## Description

### TECHNICAL FIELD

The disclosure relates to the field of ambient Internet of things (A-IoT) technology, and more particularly, to a wireless communication method, a communication device, an apparatus, and a storage medium.

### BACKGROUND

In radio frequency identification (RFID) technology, a first device (for example, an ambient power enabled Internet of things (A-IoT) terminal device) can perform random access to a second device to use service of the second device.

To expand the application of cellular IoT, it is desirable to apply RFID technology to cellular IoT. However, in a scenario of cellular IoT, if RFID technology in the related art is applied, efficiency of access to a communication system by the first device is decreased, thus affecting service quality.

### SUMMARY

The disclosure provides a wireless communication method, a communication device, an apparatus, and a storage medium. Various aspects of the disclosure are introduced below.

In a first aspect, a wireless communication method is provided. The method includes the following. A first device receives a first command sent by a second device, where the first command contains a first parameter, and the first parameter is used to determine a first slot value. The first device sends a second parameter to the second device, where the second parameter is a target parameter for accessing the second device, and a transmission time for the second parameter is determined based on the first slot value. The second parameter is carried on a first uplink frequency-domain resource in multiple uplink frequency-domain resources, and each of the multiple uplink frequency-domain resources is available for carrying the target parameter.

In a second aspect, a wireless communication method is provided. The method includes the following. A second device sends a first command to a first device, where the first command contains a first parameter, and the first parameter is used to determine a first slot value.The second device receives a second parameter sent by the first device, where the second parameter is a target parameter for accessing the second device, and a transmission time for the second parameter is determined based on the first slot value. The second parameter is carried on a first uplink frequency-domain resource in multiple uplink frequency-domain resources, and each of the multiple uplink frequency-domain resources is available for carrying the target parameter.

In a third aspect, a communication device is provided. The communication device is a first device, and the communication device includes a receiving unit and a sending unit. The receiving unit is configured to receive a first command sent by a second device, where the first command contains a first parameter, and the first parameter is used to determine a first slot value. The sending unit is configured to send a second parameter to the second device, where the second parameter is a target parameter for accessing the second device, and a transmission time for the second parameter is determined based on the first slot value. The second parameter is carried on a first uplink frequency-domain resource in multiple uplink frequency-domain resources, and each of the multiple uplink frequency-domain resources is available for carrying the target parameter.

In a fourth aspect, a communication device is provided. The communication device is a second device, and the communication device includes a sending unit and a receiving unit. The sending unit is configured to send a first command to a first device, where the first command contains a first parameter, and the first parameter is used to determine a first slot value. The receiving unit is configured to receive a second parameter sent by the first device, where the second parameter is a target parameter for accessing the second device, and a transmission time for the second parameter is determined based on the first slot value. The second parameter is carried on a first uplink frequency-domain resource in multiple uplink frequency-domain resources, and each of the multiple uplink frequency-domain resources is available for carrying the target parameter.

In a fifth aspect, a communication device is provided. The communication device includes a transceiver, a memory, and a processor. The memory is configured to store programs. The processor is configured to invoke the programs from the memory, and control the transceiver to receive or send a signal, so that the communication device performs the method according to the first aspect or the second aspect.

In a sixth aspect, an apparatus is provided. The apparatus includes a processor. The processor is configured to invoke programs from a memory, so that the apparatus performs the method according to the first aspect or the second aspect.

In a seventh aspect, a chip is provided. The chip includes a processor.The processor is configured to invoke programs from a memory, to cause a device equipped with the chip to perform the method according to the first aspect or the second aspect.

In an eighth aspect, a computer-readable storage medium is provided. The computer-readable storage medium is configured to store programs which are operable with a computer to perform the method according to the first aspect or the second aspect.

In a ninth aspect, a computer program product is provided. The computer program product includes programs which are operable with a computer to perform the method according to the first aspect or the second aspect.

In a tenth aspect, a computer program is provided. The computer program which is operable with a computer to perform the method according to the first aspect or the second aspect.

In the wireless communication method provided in embodiments of the disclosure, the first device receives the first command sent by the second device, where the first command contains the first parameter, and the first parameter is used to determine the first slot value. The first device sends the second parameter to the second device, where the second parameter is the target parameter for accessing the second device, and the transmission time for the second parameter is determined based on the first slot value. The second parameter is carried on a first uplink frequency-domain resource in multiple uplink frequency-domain resources, and each of the multiple uplink frequency-domain resources is available for carrying the target parameter. With the method, multiple first devices can access the second device in parallel, which effectively improves the access capacity and access efficiency of a communication system, and improves service quality of the communication system.

### BRIEF DESCRIPTION OF THE DRAWINGS

FIG. 1 is an exemplary architectural diagram of a wireless communication system to which embodiments of the disclosure can be applied.
FIG. 2 is an exemplary structural diagram of an ambient Internet of things (A-IoT) terminal device.
FIG. 3 is an exemplary structural diagram of a power harvesting module in FIG. 2.
FIG. 4 is a schematic diagram illustrating backscattering of an A-IoT terminal device.
FIG. 5 is an exemplary diagram illustrating an encoding manner of an A-IoT terminal device.
FIG. 6a is a schematic diagram illustrating an application scenario of an A-IoT terminal device provided in an embodiment of the disclosure.
FIG. 6b is a schematic diagram illustrating an application scenario of an A-IoT terminal device provided in another embodiment of the disclosure.
FIG. 7a is a schematic diagram illustrating single-tag reply provided in an embodiment of the disclosure.
FIG. 7b is a schematic diagram illustrating multiple-tag reply provided in another embodiment of the disclosure.
FIG. 8 is a schematic flowchart of a wireless communication method provided in embodiments of the disclosure.
FIG. 9 is a schematic structural diagram of a communication device provided in an embodiment of the disclosure.
FIG. 10 is a schematic structural diagram of a communication device provided in another embodiment of the disclosure.
FIG. 11 is a schematic diagram of an apparatus to which embodiments of the disclosure can be applied.

### DETAILED DESCRIPTION

Technical solutions of the disclosure are described below with reference to the accompanying drawings.

### Communication System Architecture

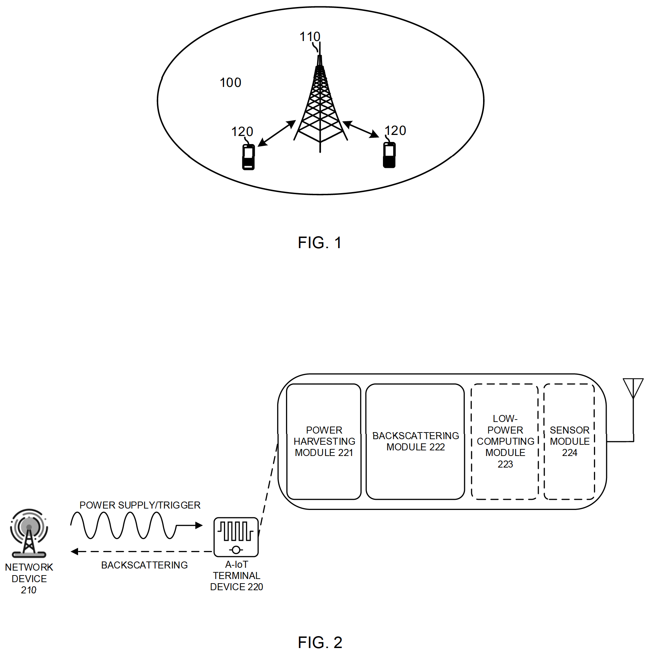

FIG. 1 illustrates a wireless communication system 100 to which embodiments of the disclosure are applied. The wireless communication system 100 can include a network device 110 and terminal devices 120. The network device 110 can be a device for communicating with the terminal devices 120. The network device 110 can provide communication coverage for a specific geographic area and can communicate with the terminal device(s) 120 located within the coverage area. The terminal device 120 can access a network (e.g., a wireless network) via the network device 110.

FIG. 1 exemplarily illustrates one network device and two terminal devices. Optionally, the wireless communication system 100 can include multiple network devices, and there can be other quantities of terminal devices in a coverage area of each network device, which is not limited in embodiments of the disclosure.

Optionally, the wireless communication system 100 can further include other network entities such as a network controller, a mobility management entity, etc., which are not limited in embodiments of the disclosure.

It should be understood that, the technical solutions of embodiments of the disclosure can be applied to various communication systems, for example: a 5th-generation (5G) system or new radio (NR), a long term evolution (LTE) system, an LTE frequency division duplex (FDD) system, an LTE time division duplex (TDD) system, etc. The technical solutions provided in the disclosure can also be applied to a future communication system, such as a sixth-generation mobile communication system, a satellite communication system, and the like.

The terminal device in embodiments of the disclosure can also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal, a wireless communication device, a user agent, or a user apparatus. The terminal device in embodiments of the disclosure can refer to a device that provides voice and/or data connectivity to a user, and can be used to connect people, things, and machines, for example, various devices with wireless connectivity such as handheld devices, in-vehicle devices, etc. The terminal device in embodiments of the disclosure can be a mobile phone, a tablet computer (Pad), a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, an Internet of things (IoT) terminal device, and the like.

Optionally, a UE can be act as a base station. For example, the UE can act as a scheduling entity for providing sidelink signals between UEs in vehicle-to-everything (V2X) or device to device (D2D). For instance, a cellular phone and an automobile can communicate with each other by using sidelink signals. A cellular phone and a smart home device can communicate without relaying communication signals via a base station.

The network device in embodiments of the disclosure can be a device for communicating with a terminal device, and the network device can also be referred to as an access-network device or a radio access-network (RAN) device. For example, the network device can be a base station. The network device in embodiments of the disclosure can refer to a RAN node (or device) that connects a terminal device to a wireless network. The base station can broadly cover various names listed below, or can be replaced by the following names, such as: NodeB, evolved NodeB (eNB), next-generation NodeB (gNB), relay station, access point (AP), transmitting and receiving point (TRP), transmitting point (TP), master station (MeNB), secondary station (SeNB), multi-standard radio (MSR) node, home base station, network controller, access node, radio node, AP, transmission node, transceiver node, baseband unit (BBU), remote radio unit (RRU), active antenna unit (AAU), remote radio head (RRH), central unit (CU), distributed unit (DU), positioning node, etc. The base station can be a macro base station, a micro base station, a relay node, a donor node, or the like, or a combination thereof. The base station can also refer to a communication module, modem, or chip in the aforementioned device or apparatus. The base station can also be a mobile switching center, a device that functions as a base station in D2D, V2X, or machine-to-machine (M2M) communication, a network-side device in a sixth-generation (6G) network, a device that functions as a base station in a future communication system, etc. The base station can support networks of the same or different access technologies. The specific technology and device form adopted by the network device are not limited in embodiments of the disclosure.

In some embodiments, the network device can be fixed or mobile. For example, a helicopter or a drone can be configured to act as a mobile network device, and one or more cells can move according to the location of the mobile network device. In other examples, a helicopter or a drone can be configured to act as a device for communicating with another network device.

In some deployments, the network device in embodiments of the disclosure can refer to a CU or a DU, or the network device can include a CU and a DU. A gNB can also include an AAU.

The network device and the terminal device can be deployed on land, including indoors or outdoors, handheld or in-vehicle-mounted; or can be deployed on water; or can also be deployed on aircraft, balloons, and satellites in the air. The scenario in which the network device and the terminal device are located is not limited in embodiments of the disclosure.

It should be understood that, all or some of the functions of the communication device in the disclosure can also be implemented by software functions running on hardware, or by virtualized functions instantiated on a platform (e.g., a cloud platform).

During discussion on standardization, a zero-power IoT can also be referred to as an ambient power enabled IoT, abbreviated as ambient IoT. In some technical literatures, a zero-power IoT is also referred to as a passive IoT. An "ambient IoT device" refers to an IoT device that is powered by various ambient energy sources, such as radio frequency (RF) energy, light energy, solar energy, thermal energy, mechanical energy, etc.. Such a device may have no energy storage capacity or may have very limited energy storage capacity (e.g., use of a capacitor with tens of microfarads (µF)). Compared with an existing IoT device, an ambient IoT device has many advantages, for example, free of conventional batteries, maintenance-free, small size, low complexity, low cost, and long service life. For brevity of illustration, ambient IoT can be abbreviated as A-IoT in the following.

### Communication technologies that may be applied to an A-IoT system

In A-IoT communication, power harvesting technology and backscattering technology are applied, and A-IoT communication is characterized by low power consumption and low cost. An A-IoT terminal device in embodiments of the disclosure can refer to an IoT device that is powered by various ambient energy sources (such as RF energy, light energy, solar energy, thermal energy, mechanical energy, etc.). Such A-IoT terminal device may have no energy storage capacity or may have very limited energy storage capacity (e.g., use of a capacitor with tens of µF). Compared with an existing IoT device, an A-IoT terminal device has many advantages, for example, free of conventional batteries, maintenance-free, small size, low complexity, low cost, and long service life. In this scenario, the terminal device 120 mentioned above can be referred to as a "zero-power device" or an "A-IoT terminal device". The working principle of an A-IoT terminal device is exemplarily introduced below with reference to FIG. 2 to FIG. 7.

As illustrated in FIG. 2, an A-IoT system can include a network device 210 and an A-IoT terminal device 220. The network device 210 can be, for example, the network device 110 in FIG. 1. The A-IoT terminal device 220 can be, for example, the terminal device 120 in FIG. 1. The network device 210 is configured to transmit a wireless power-supply signal to the A-IoT terminal device 220 and receive a backscattered signal from the A-IoT terminal device 220.

In some embodiments, the A-IoT terminal device 220 can include a power harvesting module 221 and a backscattering module 222. In some cases, the A-IoT terminal device 220 can further include a low-power computing module 223. The low-power computing module 223 can be used to provide computational functions, for example, data processing, etc., for the A-IoT terminal device 220. In other cases, the A-IoT terminal device 220 can further include a sensor module 224. The sensor module 224 is used to collect external information (e.g., ambient temperature, ambient humidity, etc.). In other cases, the A-IoT terminal device 220 can further include a storage module. The storage module is used to store some information (e.g., external information, such as item identities (IDs), collected by the sensor described above).

The power harvesting module 221 described above is configured to harvest energy. In some implementations, energy can be harvested from power-supply signals sent by other devices or from external environment. The power-supply signal can be an "RF signal" sent by the network device 210. Therefore, the power harvesting module can be an "RF power harvesting module".

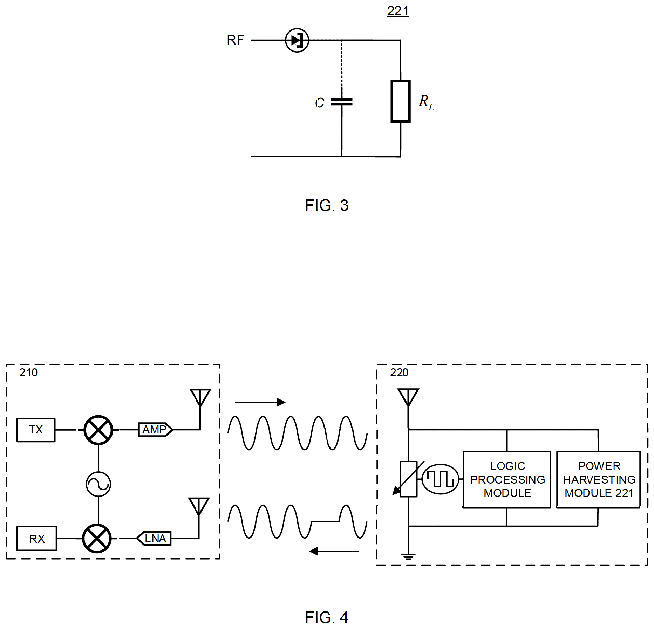

FIG. 3 illustrates a possible structure of the power harvesting module 221. As illustrated in FIG. 3, based on the principle of electromagnetic induction, the power harvesting module 221 can harvest energy from spatial electromagnetic waves of RF signals and store the harvested energy in a capacitor C, which is a process of charging the capacitor C. When charging of the capacitor C is completed, the capacitor C can begin to discharge to power the A-IoT terminal device 220. For example, with discharge of the capacitor C, the A-IoT terminal device 220 can be driven to perform low-power demodulation of data sent by other devices. As another example, with discharge of the capacitor C, the A-IoT terminal device 220 can be driven to modulate data to-be-sent. As yet another example, with discharge of the capacitor C, a sensor of the A-IoT terminal device 220 can be driven to perform data collection. For another example, with discharge of the capacitor C, the A-IoT terminal device 220 can be driven to read data from a memory 215, and so on.

The principle of backscattering is introduced below with reference to FIG. 4. Referring to FIG. 4, the A-IoT terminal device 220 receives a wireless signal sent by another device (such as the network device 210) and modulates the wireless signal to load data that needs to be transmitted. Then, the A-IoT terminal device 220 radiates the modulated signal from an antenna. Such information transmission process is called backscattering. The wireless signal described above can also be referred to as a carrier signal. A carrier signal can refer to a wireless signal not subject to modulation. A carrier signal can be, for example, a sinusoidal wave signal. Here, backscattering is closely related to a load modulation function. The load modulation function can be understood as a process of adjusting and controlling circuit parameters of an oscillation circuit of the A-IoT terminal device according to the rhythm of data stream and thus changing parameters such as an impedance of the A-IoT terminal device, thereby completing the modulation process.

In some implementations, the A-IoT terminal device 220 can also be provided with a logic processing unit to perform corresponding computational functions.

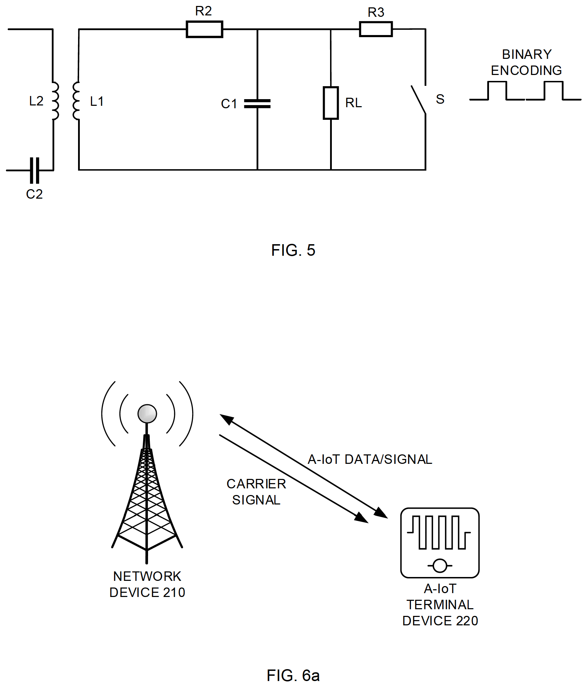

Typically, the load modulation function can be implemented through two methods: resistance-based load modulation and capacitor-based load modulation. FIG. 5 is a diagram illustrating a circuit of an A-IoT terminal device based on resistance-based load modulation technology. In resistance-based load modulation, a resistor RL can be connected in parallel to a load. A switch S can be controlled based on a binary data stream to turn on or turn off the resistor RL. In this way, the on-off states of the resistor RL causes a change in circuit voltage, and with change in circuit voltage, the amplitude of a backscattered signal from the A-IoT terminal device can be controlled, thereby achieving modulation of the backscattered signal, i.e., performing amplitude-shift keying (ASK) modulation on the backscattered signal.

Similarly, in capacitor-based load modulation, the on-off states of a capacitor can be controlled based on a binary data stream to change the resonant frequency of a circuit, thereby changing the operating frequency of a backscattered signal, thereby achieving frequency-shift keying (FSK) modulation.

As can be seen, an A-IoT terminal device performs information modulation on a carrier signal through load modulation, thereby realizing backscattering. Therefore, an A-IoT terminal device has significant advantages: (1) an A-IoT terminal device does not actively transmit signals, and thus does not require complex RF links, such as a power amplifier, an RF filter, etc.; (2) an A-IoT terminal device does not need to actively generate high-frequency signals, and thus does not require high-frequency crystal oscillators; (3) through backscattering, an A-IoT terminal device does not need to consume energy of the A-IoT terminal device itself during signal transmission.

With rapid development of the cellular IoT, for example, the 3^{rd}-generation partnership project (3GPP) has standardized IoT technologies such as narrow band internet of things (NB-IoT), machine type communication (MTC), and reduced capability (RedCap). However, IoT communication requirements in many scenarios still cannot be satisfied by applying existing technologies, such as harsh communication environments (high temperature, extremely low temperature, high humidity, high pressure, high radiation, or high-speed movement, etc.), requirements for extremely small terminal forms, and extremely low costs, etc. Therefore, to meet these IoT communication requirements that are not yet satisfied, for a cellular network, it is also necessary to develop ultra-low-cost, extremely small-sized, battery-free/maintenance-free IoT, and A-IoT can exactly satisfy this requirement.

Based on discussion on A-IoT application scenarios in 3GPP system architecture (SA) 1, A-IoT can at least be applied to the following four types of scenarios: (1) object recognition, such as logistics, management of products in a product line, and management of a supply chain; (2) environmental monitoring, such as monitoring of working environment, temperature and humidity of natural environment, and toxic gas; (3) positioning, such as indoor positioning, intelligent object search, and positioning of products in a product line; (4) intelligent control, such as intelligent control of various electrical appliances (switching-on and switching-off of an air conditioner and temperature adjustment) in smart home, and intelligent control of various facilities (automatic pouring and fertilization) in an agricultural greenhouse.

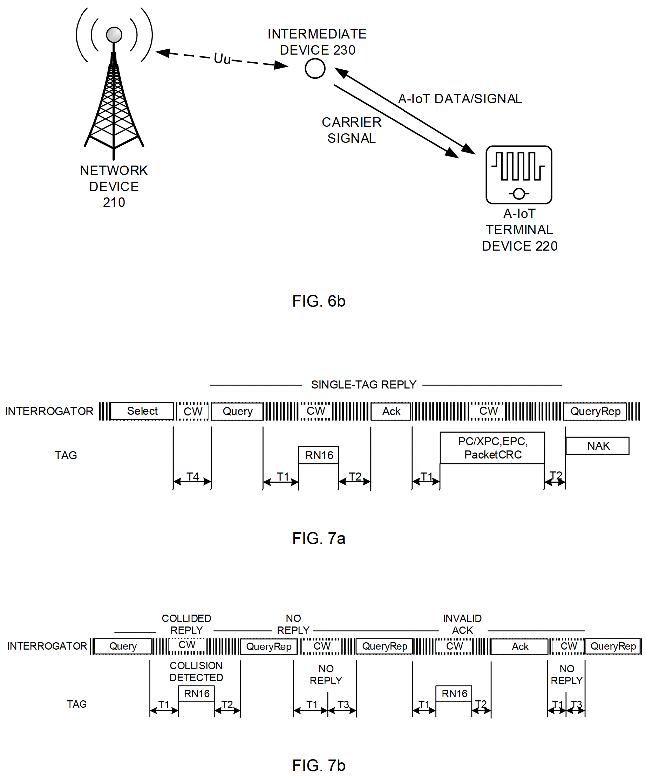

In a cellular network-based low-power IoT system, as illustrated in FIG. 6a, the A-IoT terminal device 220 can directly transmit carrier signals to the network device 210 and receive carrier signals from the network device 210, and send or backscatter corresponding data or signals to the network device 210. In other implementations, as illustrated in FIG. 6b, communication between the A-IoT terminal device 220 and the network device 210 can also be implemented via an intermediate device 230 (e.g., a relay node). In this case, the intermediate device 230 sends carrier signals to the A-IoT terminal device 220, and the A-IoT terminal device 220 sends or backscatters corresponding data or signals to the intermediate device 230.

### Classification of A-IoT terminal devices

Based on current 3GPP discussions, A-IoT terminal devices can be classified into the following two types with regard to energy storage capacity and capability of generating RF signals for signal transmissions.

Device type 1: transmit power is around 1 microwatts (µW). Device type 1 has energy storage functionality, but has no independent signal generation functionality and uplink/downlink signal amplification functionality. Device type 1 can only rely on backscattering for signal transmission.

Device type 2: transmit power is a few hundred µW. Device type 2 has energy storage functionality, has uplink/downlink signal amplification functionality, and can independently generate signals or perform signal transmission by means of backscattering.

### Industry applications, use cases, and service models of A-IoT

A-IoT supports many industrial applications, such as automated warehousing, smart home, smart agriculture, and personal item search.

As an example, with regard to the application of automated warehousing, an automated warehouse inventory scenario involves multiple stages, including verification and unloading, inbound, inventory, outbound, and inspection and packing, etc. As goods are transferred, stored, and inventoried, a large amount of warehouse information is generated. Such information typically has characteristics of frequent data reading operations and large data amount. Ambient IoT devices are attached to items of different values and purposes, such as pallet containers and individual products, and relevant communication devices are deployed. Through information exchange between communication devices and tags, accurate and rapid inventory and efficient management of storage information can be achieved at each stage.

For automated warehousing, 3GPP has defined a use case of inventory. The purpose of this use case is to find which goods (e.g., boxes, drawers, packages, tools, etc.) exist within a specific area. Once a request is received from a network for a specific area, A-IoT devices attached to these goods report item-associated IDs of the A-IoT devices to the network, and can also report some other information, such as state information, measurement results, and location information. In terms of service model, it belongs to a device originated-device terminated triggered (DO-DTT) mode.

### Random access in radio frequency identification (RFID) technology

In RFID technology, when an interrogator needs to perform read/write operations on a tag(s), the interrogator first sends a Query command to all tags. The command contains a parameter *Q* (where *Q* is an integer in the range of 0~15). After receiving the command, a tag(s) within an RF field of the interrogator generates a random number in the range of 0~2^*Q*-1, uses the random number as a slot for response for the tag, and loads the random number into a slot counter for the tag. Only a tag(s) with a slot value of 0 of a slot counter for the tag will send RN16 (a 16-bit random number) to the interrogator as a reply. After receiving the RN16 sent by a tag, the interrogator sends an acknowledgement (ACK) command with the same RN16. If the tag receives a valid ACK command, the tag immediately transitions to an acknowledged state and backscatters a protocol control (PC), an extended capabilities port (ECP), and a cyclic redundancy check-16 (CRC-16) of the tag. The tag in the acknowledged state executes a random number request (REQ_RN) (RN16) command sent by the interrogator. After receiving a valid command, the tag sends a new RN16 (handle) and transitions to another state (an open state or a secured state). In this state, the interrogator can perform read/write operations on the tag individually.

### Query command, QueryRep command, and Tag reply

Exemplarily, fields in a Query command is illustrated in Table 1. As detailed in Table 1, DR indicates a data rate from a tag to an interrogator, M indicates an encoding method, TRext indicates whether a pilot tone is contained in a preamble; Target indicates a tag(s) selected; Sel is an abbreviation for session and indicates a selection condition for Target, and *Q* indicates the foregoing parameter *Q*.

**Table 1**

| | Command | DR | M | TRext | Sel | Session | Target | Q | CRC |
|---|---|---|---|---|---|---|---|---|---|
| Number of bits | 4 | 1 | 2 | 1 | 2 | 2 | 1 | 4 | 5 |
| Description | 1000 | 0:DR=1 | 00:M=1 | 0:No pilot tone | 00:All | 00:S0 | 0:A | 0-15 | CRC-5 |
| | | 1:DR=64/ 3 | 01:M=2 | | 01:All | 01:S1 | 1:B | | |
| | | | 10:M=4 | 1:Use pilot tone | 10:~SL | 10:S2 | | | |
| | | | 11:M=8 | | 11:SL | 11:S3 | | | |

Exemplarily, fields in a response message (the foregoing RN16) replied by a tag in response to the Query command is illustrated in Table 2.

**Table 2**

| | Reply |
|---|---|
| Number of bits | 16 |
| Description | RN16 |

The QueryRep command can be understood as an instruction command for a tag to proceed to a next slot at high speed. After receiving the command, a tag decrements its slot counter by 1. If the slot counter for the tag becomes 0, it indicates that it is the tag's turn to send information. Exemplarily, fields in the QueryRep command is illustrated in Table 3.

**Table 3**

| | Command | Session |
|---|---|---|
| Number of bits | 2 | 2 |
| Description | 00 | 00:S0 |
| | | 01:S1 |
| | | 10:S2 |
| | | 11:S3 |

Exemplarily, fields in a response message replied by a tag in response to the QueryRep command is illustrated in Table 4.

**Table 4**

| | Reply |
|---|---|
| Number of bits | 16 |
| Description | RN16 |

Exemplarily, an ACK command sent by the interrogator to acknowledge a single tag (the interrogator sends an ACK to acknowledge a single tag) is illustrated in Table 5. The single tag is a tag which sent RN16 to the interrogator before the interrogator replies with the ACK command. The ACK command is used to echo the RN16 (the ACK echoes the Tag's backscattered RN16).

**Table 5**

| | Command | RN |
|---|---|---|
| Number of bits | 2 | 16 |
| Description | 01 | Echoed RN16 or handle |

For ease of understanding, the procedure of tag reply in the related art is described below with reference to FIG. 7a and FIG. 7b.

As illustrated in FIG. 7a, the procedure of single-tag reply is as follows.

An interrogator can firstly send a Select command to select a tag(s) which the interrogator is to communicate with.

After sending the Select command, the interrogator can enter a call and wait state for a duration T4, then send a Query command to the selected tag(s), and enter the call and wait state again after completing sending the Query command.

During the call and wait period, each of the selected tag(s) receives the Query command and generates a random number and loads the random number into a slot counter for the selected tag. Then, the selected tag(s) receives a QueryRep command to change the slot value of the slot counter for the selected tag. When the slot value of a single tag becomes 0, the single tag sends RN16 to the interrogator. The duration of the call and wait period for the interrogator is "T1 + the time for the tag to send RN16 + T2" illustrated in FIG. 7a. Here, T1 is a period for which the slot value of a slot counter for a single tag is kept to be 0 through the foregoing method.

After the call and wait period ends, the interrogator can send an ACK command to the single tag. If the tag can receive a valid ACK command, then after the next T1 period, the tag can backscatter a PC, an EPC, and a CRC, etc. of the tag to the interrogator.

Optionally, the interrogator can proceed to subsequent procedures based on the EPC reported by the tag. For example, if the EPC is valid, the interrogator can continue sending the QueryRep command or other commands, such that other tags reply in response to the QueryRep command or execute other services via other commands. Other services can be, for example, services that can be executed after reply is completed. As another example, if the EPC is invalid, the interrogator can send a negative acknowledgement (NAK) command.

As mentioned above, each tag selected by the interrogator generates a random number based on the Query command and loads the random number into a slot counter for the tag, thereby determining their transmission time. Therefore, in a scenario involving multiple-tag reply, some special cases may occur.

Exemplarily, as illustrated in FIG. 7b, the following cases may occur if multiple tags reply simultaneously.

Collided reply: after an interrogator sends a Query command, multiple tags may have their slot counter becoming 0 simultaneously, that is, random numbers generated by these multiple tags are identical. In this case, multiple tags use the same uplink frequency-domain resource to send RN16 to the interrogator at the same time. As a result, collision of reply messages occurs and resulting in collision detected.

No reply: after the interrogator sends a QueryRep command, there may be a case where no tag reports a message, which means no reply.

Invalid ACK: after the interrogator replies with an ACK command for RN16 reported by a tag, there may be a case where information, such as a PC, an EPC, and a CRC, reported by the tag is not received, which indicates that the ACK is an invalid ACK.

In some embodiments, if any one of the above three cases occurs during multiterminal reply, the interrogator sends a QueryAdjust command to adjust the value of parameter *Q*, or the interrogator sends the QueryRep command again.

In the related art, tag reply in RFID technology is performed serially, that is, when one tag replies, an interrogator can perform read/write operations on the tag individually. In this case, since the interrogator does not send a QueryRep command, other tags cannot get a slot opportunity. Reply of other tags can be initiated only after read/write operations on the one tag is completed.

However, compared with RFID in the related art, a 3GPP system has an advantage in coverage, because the 3GPP system can provide inventory services across a larger area. With expansion in coverage of the 3GPP system, the number of devices to-be-inventoried/accessed significantly increases. If serial access technology for multiple tags in the traditional RFID-based technology is adopted, it will greatly prolong the duration of an entire inventory process, which affects service quality. Therefore, more efficient access technology is needed.

To address the foregoing problems, embodiments of the disclosure are described in detail below.

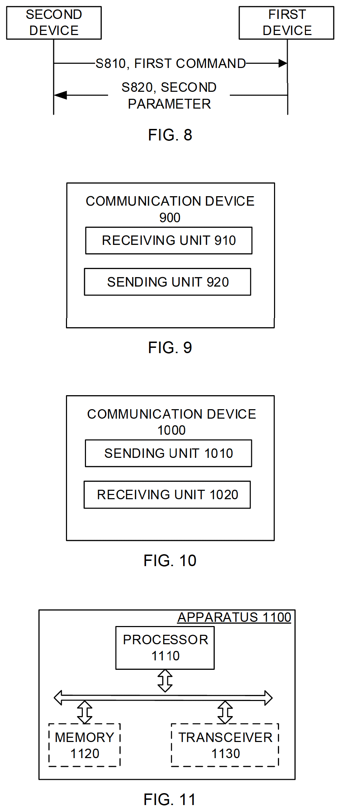

FIG. 8 is a schematic flowchart of a wireless communication method provided in embodiments of the disclosure. The method in FIG. 8 is described from the perspective of interaction between a first device(s) and a second device. The first device is a terminal device, which can be, for example, an A-IoT terminal device (e.g., a tag) mentioned above. The terminal device can also be other types of terminal devices, such as a terminal device that can perform random access in a manner similar to an A-IoT terminal device. The second device can be a network device or an intermediate device described above. The network device can be any type of communication device for providing coverage for a terminal device. For example, the network device can be a base station or an interrogator. The intermediate device can also be called an intermediate node. The intermediate device can be an intermediate device connected between the first device and the network device. The intermediate device can be an electronic device that can achieve communication between the first device and the network device via the intermediate device. For example, the intermediate device can be an intermediate UE. The intermediate UE can be, for example, a router or a relay device.

Referring to FIG. 8, in step S810, the first device receives a first command sent by the second device. For example, the first command can be a Query command. Alternatively, the first command can be referred to as inventory request, paging, inventory command, or the like.

In embodiments of the disclosure, the first command or a parameter in the first command can indicate an occasion for the first device to access the second device. For example, the first command can contain a first parameter, and the first parameter is used to determine a first slot value. The first slot value can serve as a slot value for response for the case where the first device accesses the second device. For example, the first parameter can be a *Q* value in the Query command. As an example, the *Q* value can be an integer in a range of 0~15. The first slot value can be a random number generated based on the *Q* value. As an example, the first slot value can be a random number in a range of 0~2^*Q*-1.

In some embodiments, the first command can contain one first parameter. The first parameter can be intended for one first device, or can be intended for multiple first devices. The first parameter is used to determine a first slot value for one first device or a first slot value for multiple first devices.

In other embodiments, the first command can contain multiple first parameters. The multiple first parameters can be used to determine first slot values for multiple terminal devices that are in one-to-one correspondence with the parameters.

In some embodiments, the second device can send the first command over one downlink frequency-domain resource.

In other embodiments, the second device can send the first command over multiple downlink frequency-domain resources.

In some embodiments, the first command is carried on a first downlink frequency-domain resource. Optionally, the second device can monitor the first command on the first downlink frequency-domain resource. The downlink frequency-domain resource mentioned in various embodiments of the disclosure can be a downlink carrier, a downlink resource block (RB), a downlink bandwidth part (BWP), a downlink control resource set (CORESET), and the like.

In some embodiments, the first downlink frequency-domain resource can be a downlink frequency-domain resource dedicated to transmitting a downlink signal(s) that is used for the first device to access the second device. In other words, regardless of the number of terminal devices, the second device transmits downlink signals only on the first downlink frequency-domain resource, and the terminal devices can share the downlink frequency-domain resource to receive downlink signals. Optionally, the downlink signal herein can include a Query command, a QueryRep command, or an ACK command.

As an example, the first downlink frequency-domain resource can be a downlink frequency-domain resource agreed in a system.

As another example, the first downlink frequency-domain resource can be a downlink frequency-domain resource selected from multiple downlink frequency-domain resources in a system. For instance, the first downlink frequency-domain resource can be a downlink frequency-domain resource selected from multiple downlink frequency-domain resources in the system based on a terminal-device capability.

In other embodiments, each of the multiple downlink frequency-domain resources in the system is used to carry a first command corresponding thereto. The first downlink frequency-domain resource can be a downlink frequency-domain resource which is selected from the multiple downlink frequency-domain resources in the system and corresponds to the first command for the first device. For example, each of the multiple downlink frequency-domain resources is used to transmit one Query command. A Query command transmitted on each downlink frequency-domain resource corresponds to a terminal device. The first device is one of multiple terminal devices, and the first downlink frequency-domain resource is a downlink frequency-domain resource for transmitting the first command for the first device. First parameters in their respective Query commands can be the same or different.

In step S820, the first device sends a second parameter to the second device.

The second parameter is a target parameter for accessing the second device. For example, the second parameter can be RN16 that is used as a response message. The target parameter can be a random number. For example, the target parameter can be a 16-bit random number corresponding to RN16.

In some embodiments, a transmission time for the second parameter can be determined based on the first slot value. For example, the transmission time for the second parameter can be a moment at which the first slot value is decremented to 0 from a random value generated based on the foregoing *Q* value.

In embodiments of the disclosure, there can be multiple uplink frequency-domain resources in the system. Each of the multiple uplink frequency-domain resources is available for carrying the target parameter. The second parameter is carried on a first uplink frequency-domain resource among the multiple uplink frequency-domain resources.

In some embodiments, the first uplink frequency-domain resource can be determined based on the capability of the first device and/or a second uplink frequency-domain resource provided by the second device. The second uplink frequency-domain resource can include multiple uplink frequency-domain resources.

As an example, the second uplink frequency-domain resource can be an uplink frequency-domain resource supported by a terminal and/or an uplink frequency-domain resource indicated by the second device via the first command or other commands. The uplink frequency-domain resource supported by a terminal can be one or multiple. The uplink frequency-domain resource indicated by the second device via the first command or other commands can also be one or multiple.

Embodiments of the disclosure do not specifically limit the method for determining the first frequency-domain resource from the multiple uplink frequency-domain resources.

For example, the first uplink frequency-domain resource can be an uplink frequency-domain resource selected by the first device randomly or according to a certain weighting from the multiple uplink frequency-domain resources. As an example, this method corresponds to the case where the second device sends the first command on only one downlink frequency-domain resource.

As another example, there are multiple downlink frequency-domain resources and multiple uplink frequency-domain resources in the system. There is one-to-one mapping, one-to-multiple mapping, or multiple-to-one mapping between the multiple downlink frequency-domain resources and the multiple uplink frequency-domain resources. The first uplink frequency-domain resource is an uplink frequency-domain resource corresponding to the first downlink frequency-domain resource among the multiple uplink frequency-domain resources. Here, the first downlink frequency-domain resource is a downlink frequency-domain resource used to send to the first device a downlink signal for the first device to access the second device. Exemplarily, each of the multiple downlink frequency-domain resources are used to transmit a Query command or a QueryRep command. As an example, this method corresponds to the case where the second device can send the first command(s) on multiple downlink frequency-domain resources.

As an implementation, the first command indicates the first parameter and the first uplink frequency-domain resource. For example, the first command can indicate a correspondence between the first parameter and the first uplink frequency-domain resource.

As an example, when sending the first command(s), the second device indicates the first parameter(s) respectively for one or more uplink frequency-domain resources. The first parameters indicated for these different uplink frequency-domain resources can be the same or different. That is, the second device indicates multiple sets of (uplink frequency-domain resource, *Q* value).

As another example, the second device can indicate the first parameters for all uplink frequency-domain resources. This method corresponds to the case where all uplink frequency-domain resources are in one-to-one correspondence with all downlink frequency-domain resources. In this case, only the first parameter needs to be indicated.

In some embodiments, the first parameter is used to determine a transmission time for the target parameter on each of multiple uplink frequency-domain resources. For example, if the first parameter(s) is indicated respectively for one or more uplink frequency-domain resources, each of the first parameters can be used to determine a time for a first device, which receives the first parameter, to send the target parameter on a corresponding uplink frequency-domain resource.

In embodiments of the disclosure, by introducing multiple uplink frequency-domain resources in random access of the first device, multiple first devices can access the second device in parallel, such that multiple first devices can access the second device in the same slot, which is possible to effectively improve the access capacity and access efficiency of a communication system compared with RFID in the related art in which only a single first device can access in the same slot.

In some embodiments, the wireless communication method provided in embodiments of the disclosure further includes the following. The first device receives a second command sent by the second device.

The second command is used to adjust the first slot value. As an example, the second command can be a QueryRep command.

In some embodiments, the second command indicates the first uplink frequency-domain resource. For example, the second command indicates a correspondence between a slot indication in the second command and the first uplink frequency-domain resource.

In other embodiments, the second command is carried on a second downlink frequency-domain resource in multiple downlink frequency-domain resources, and each of the multiple downlink frequency-domain resources is available for carrying a second command corresponding thereto. In other words, the second device can send the second command individually on each of the multiple downlink frequency-domain resources.

As an example, the second downlink frequency-domain resource is a downlink frequency-domain resource corresponding to the first uplink frequency-domain resource among the multiple downlink frequency-domain resources.

In some embodiments, the multiple downlink frequency-domain resources and the multiple uplink frequency-domain resources are one-to-one mapping, one-to-multiple mapping, or multiple-to-one mapping. In short, there is a correspondence between the second downlink frequency-domain resource and the first uplink frequency-domain resource.

In some embodiments, before adjusting the first slot value according to the second command, the first device needs to determine whether the second command is valid.

As an example, the first device can determine, according to whether the second command is applicable to the first uplink frequency-domain resource, whether the second command is valid.

As an example, if the second command does not indicate any uplink frequency-domain resource, it indicates that the second command is valid. In this case, it means that the second command is applicable to any uplink frequency-domain resource, that is, the second command is applicable to the first uplink frequency-domain resource.

As another example, the second command is valid if the second command indicates the first uplink frequency-domain resource; otherwise, the second command is invalid. For instance, the second command indicates one or more uplink frequency-domain resources, and the one or more uplink frequency-domain resources include the first uplink frequency-domain resource.

As yet another example, the first device can determine, according to whether the second command carries an ID field for the first device, whether the second command is valid. For example, the ID field for the first device can be a session ID. The second command is valid if the second command carries the session ID; otherwise, the second command is invalid.

In some embodiments, after determining that the second command is valid, the first device adjusts the first slot value according to the second command. For example, if the second command is valid, the first slot value for the first device will be decremented by 1; otherwise, the first slot value for the first device will not be decremented.

In some embodiments, when the first slot value for the first device is decremented to 0, the first device sends the second parameter to the second device.

In some embodiments, in order to ensure successful access to the second device by the first device, the wireless communication method provided in embodiments of the disclosure further includes the following. The first device receives a third command sent by the second device.

The third command is an acknowledgment command for the second parameter. For example, the third command can be an ACK command.

In some embodiments, the third command contains the second parameter.

In some embodiments, the third command can be transmitted over a single downlink frequency-domain resource in the system. For example, if the third command is an ACK command, one or more first devices can be acknowledged. Each first device is associated with a second parameter and a corresponding uplink frequency-domain resource.

As an example, the third command indicates the first uplink frequency-domain resource and the second parameter. For example, the third command indicates a correspondence between the first uplink frequency-domain resource and the second parameter. For instance, when sending the third command, the second device indicates the second parameter(s) respectively for one or more uplink frequency-domain resources. That is, the second device indicates multiple sets of (uplink frequency-domain resource, second parameter). The first uplink frequency-domain resource is an uplink frequency-domain resource corresponding to the first device and is one of the multiple uplink frequency-domain resources.

In some embodiments, if the third command received by the first device contains the first uplink frequency-domain resource and the second parameter, the first device determines that reception of the third command is successful.

In some embodiments, the third command is carried on a third downlink frequency-domain resource in multiple downlink frequency-domain resources, and each of the multiple downlink frequency-domain resources is available for carrying a third command corresponding thereto.

In some embodiments, the multiple downlink frequency-domain resources are in one-to-one mapping with multiple uplink frequency-domain resources. In short, there is a correspondence between the third downlink frequency-domain resource and the first uplink frequency-domain resource.

In some embodiments, if the third command received by the first device over the third downlink frequency-domain resource contains the second parameter, the first device determines that reception of the third command is successful.

Embodiments of the disclosure are described in further detail below with reference to specific examples. In the following examples, the first device is an A-IoT terminal device, and the second device is a base station. It should be noted that, the following examples are only intended to help those skilled in the art understand embodiments of the disclosure rather than limit embodiments of the disclosure to the specific numerical values or specific scenarios illustrated. Based on the examples provided, those skilled in the art can apparently make various equivalent modifications or changes, and such modifications or changes also fall within the scope of embodiments of the disclosure.

### Example 1

This example is intended for a wireless communication system configured with a single downlink frequency-domain resource and multiple uplink frequency-domain resources. A Query command indicates a *Q* value for each uplink frequency-domain resource. A QueryRep command indicates an uplink frequency-domain resource(s) that can be applied to a slot. An ACK command indicates corresponding RN16 for an uplink frequency-domain resource(s).

The implementation of this embodiment is as follows.
1. An A-IoT terminal receives a Query command sent by a base station. In some embodiments, the name of the Query command can also be inventory request, paging, inventory, etc.

For example, the A-IoT terminal monitors the Query command on one certain downlink frequency-domain resource. That is, the base station only needs to send the Query command on the downlink frequency-domain resource, and all A-IoT terminals monitor the Query command on the downlink frequency-domain resource. In some embodiments, the downlink frequency-domain resource can be one downlink carrier, one downlink RB, one downlink BWP, one downlink CORESET, etc.

2. The A-IoT terminal determines a first uplink frequency-domain resource.

As an implementation, the A-IoT terminal can determine the first uplink frequency-domain resource based on a terminal capability and/or a second uplink frequency-domain resource provided by the base station. For example, the second uplink frequency-domain resource can be one or more uplink frequency-domain resources supported by the terminal for transmission; and/or the second uplink frequency-domain resource can be an uplink frequency-domain resource supported by a current network. As an example, the uplink frequency-domain resource supported by the current network can be indicated to the terminal by the base station via the Query command or other commands. If an uplink frequency-domain resource(s) supported by the terminal and/or an uplink frequency-domain resource the base station is multiple, the terminal can also select one uplink frequency-domain resources randomly or according to a certain weighting from the multiple uplink frequency-domain resources.

3. The A-IoT terminal generates a random number ranging from 0 to 2^*Q*-1 based on a *Q* value indicated for the first uplink frequency-domain resource in the Query command, and takes the random number as a slot value for reply.

As an implementation, when sending the Query command, the base station indicates the *Q* value(s) respectively for one or more uplink frequency-domain resources. Optionally, the *Q* values indicated for these different uplink frequency-domain resources can be the same or different. That is, the base station indicates multiple sets of (uplink frequency-domain resource, *Q* value).

4. The A-IoT terminal receives a QueryRep command, and determines whether the QueryRep command is applicable to the first uplink frequency-domain resource. If the QueryRep command is applicable to the first uplink frequency-domain resource, the A-IoT terminal decrements the slot value by 1; otherwise, the A-IoT terminal does not decrement the slot value.

Embodiments of the disclosure do not specifically limit the method for determining whether the QueryRep command is applicable to the first uplink frequency-domain resource.

As an implementation, the QueryRep command does not indicate any uplink frequency-domain resource. In this case, it means that the QueryRep command is applicable to any uplink frequency-domain resource.

As another implementation, the QueryRep command indicates one or more uplink frequency-domain resources and contains the first uplink frequency-domain resource.

5. When the slot value is decremented to 0, the A-IoT terminal sends a first RN16 to the base station.

6. After sending the first RN16, the A-IoT terminal can also receive an ACK command.

Optionally, when sending the ACK command(s), the base station can acknowledge one or more terminals. Each terminal is associated with an RN16 and a corresponding uplink frequency-domain resource. That is, the ACK commands can indicate multiple sets of (RN16, uplink frequency-domain resource).

Optionally, if the ACK command sent by the base station contains the first uplink frequency-domain resource and the first RN16, the terminal determines that reception of the ACK command is successful.

In embodiments of the disclosure, random access of A-IoT terminals is performed based on a single downlink frequency-domain resource and multiple uplink frequency-domain resources. The Query command indicates a *Q* value for each uplink carrier, the QueryRep command indicates an uplink carrier that can be applied to the slot, and the ACK command indicates a corresponding RN16 for an uplink carrier. With this method, both the capacity of the wireless communication system and access efficiency of A-IoT terminals can be improved, and in addition, service quality of the wireless communication system can be improved.

### Embodiment 2

This example is intended for a wireless communication system configured with multiple downlink frequency-domain resources and multiple uplink frequency-domain resources. Each of the multiple downlink frequency-domain resources can be a frequency-domain resource for transmission of a Query command or a QueryRep command. In some embodiments, the Query command can also be sent over a single downlink transmission resource. That is, in this embodiment, the Query command(s) is sent over one downlink frequency-domain resource or multiple downlink frequency-domain resources. The Query command(s) is sent over one or more downlink frequency-domain resources in order to determine a set of downlink frequency-domain resources (i.e. multiple downlink transmission resources) for sending the QueryRep commands subsequently. The QueryRep command can be sent individually on each downlink frequency-domain resource. Each A-IoT terminal monitors the QueryRep command only on a downlink carrier corresponding to an uplink carrier for the A-IoT terminal and calculates a slot. Each A-IoT terminal determines an uplink frequency-domain resource for the A-IoT terminal. For example, each A-IoT terminal can determine an uplink frequency-domain resource for the A-IoT terminal based on the capability or random access.

The implementation of this embodiment is as follows.
1. An A-IoT terminal receives a Query command sent by a base station. In some embodiments, the name of the Query command can also be inventory request, paging, inventory, etc.

As an implementation, the A-IoT terminal determines a second downlink frequency-domain resource. For example, the second downlink frequency-domain resource can be one downlink frequency-domain resource agreed in a system. Alternatively, the second downlink frequency-domain resource can be one selected from multiple downlink frequency-domain resources in the system based on a terminal capability. The A-IoT terminal can monitor the Query command on the second downlink frequency-domain resource.

In some embodiments, the base station sends the Query command only on the second downlink frequency-domain resource.

In other embodiments, the base station can send the Query commands on multiple downlink frequency-domain resources in the system, and the multiple downlink frequency-domain resources include the second downlink frequency-domain resource.

Embodiments of the disclosure do not specifically limit the downlink frequency-domain resource. For example, the downlink frequency-domain resource can be one downlink carrier, one downlink RB, one downlink BWP, one downlink CORESET, etc.

2. The A-IoT terminal determines a second uplink frequency-domain resource based on the terminal capability and/or an uplink frequency-domain resource provided by the base station.

As an example, an uplink frequency-domain resource corresponding to the second downlink frequency-domain resource is used as the second uplink frequency-domain resource. The network configures multiple uplink frequency-domain resources and multiple downlink frequency-domain resources, and there is one-to-one mapping between the multiple uplink frequency-domain resources and the multiple downlink frequency-domain resources. This method corresponds to the case where the base station sends the Query commands on multiple downlink frequency-domain resources.

As another example, the terminal selects one uplink frequency-domain resource randomly or according to a certain weighting from multiple uplink frequency-domain resources. This method corresponds to the case where the base station sends the Query command on only one downlink frequency-domain resource.

3. The A-IoT terminal generates a random number ranging from 0 to 2^*Q*-1 based on a *Q* value(s) indicated for the second uplink frequency-domain resource or indicated for all uplink frequency-domain resources in the Query command, and takes the random number as a slot value for reply.

As an implementation, when sending the Query command, the base station indicates the *Q* value(s) respectively for one or more uplink frequency-domain resources. The *Q* values indicated for these different uplink frequency-domain resources can be the same or different. That is, the base station indicates multiple sets of (uplink frequency-domain resource, *Q* value).

As another implementation, the base station indicates the *Q* values for all uplink frequency-domain resources. In this case, only the *Q* value needs to be indicated.

4. The A-IoT terminal(s) determines a third downlink frequency-domain resource for receiving a QueryRep command.

There is a correspondence between the third downlink frequency-domain resource and the second uplink frequency-domain resource. The base station sends the QueryRep command individually on each of multiple downlink frequency-domain resources individually.

5. The A-IoT terminal receives the QueryRep command on the third downlink frequency-domain resource. If the A-IoT terminal determines that the QueryRep command received matches a session ID for the A-IoT terminal, the A-IoT terminal decrements the slot value by 1; otherwise, A-IoT terminal does not decrement the slot value.

6. When the slot value is decremented to 0, the A-IoT terminal sends a second RN16 to the base station.

7. After sending the second RN16, the A-IoT terminal receives an ACK command on the third downlink frequency-domain resource.

Optionally, if the received ACK command contains the second RN16, the terminal determines that reception of the ACK command is successful.

In embodiments of the disclosure, random access of A-IoT terminals is performed based on multiple downlink frequency-domain resources and multiple uplink frequency-domain resources. The Query command(s) is sent over one downlink carrier or multiple downlink carriers (in order to determine a set of downlink carriers for sending the QueryRep commands subsequently). Each A-IoT terminal determines an uplink carrier for the A-IoT terminal (e.g., based on capability or randomly). The QueryRep command is sent individually on each downlink carrier. Each A-IoT terminal monitors the QueryRep command only on a downlink carrier corresponding to an uplink carrier for the A-IoT terminal and calculates a slot. With this method, both the capacity of the wireless communication system and access efficiency of A-IoT terminals can be improved.

The method embodiments of the disclosure are described in detail above with reference to FIG. 1 to FIG. 8. The apparatus embodiments of the disclosure are described in detail below with reference to FIG. 9 to FIG. 11. It should be understood that, the elaboration of the method embodiments and the elaboration of the apparatus embodiments correspond to each other. Therefore, for parts not described in detail, reference can be made to the foregoing method embodiments.

FIG. 9 illustrates a communication device 900 provided in embodiments of the disclosure. The communication device 900 can be the first device mentioned above. The communication device 900 can include: a receiving unit 910 and a sending unit 920. The receiving unit 910 is configured to receive a first command sent by a second device, where the first command contains a first parameter, and the first parameter is used to determine a first slot value. The sending unit 920 is configured to send a second parameter to the second device, where the second parameter is a target parameter for accessing the second device, and a transmission time for the second parameter is determined based on the first slot value. The second parameter is carried on a first uplink frequency-domain resource in multiple uplink frequency-domain resources, and each of the multiple uplink frequency-domain resources is available for carrying the target parameter.

Optionally, the first command indicates the first parameter and the first uplink frequency-domain resource.

Optionally, the first parameter is used to determine a transmission time for the target parameter on each of the multiple uplink frequency-domain resources.

Optionally, the first command is carried on a first downlink frequency-domain resource in multiple downlink frequency-domain resources, and each of the multiple downlink frequency-domain resources is available for carrying a first command corresponding thereto.

Optionally, the first uplink frequency-domain resource is an uplink frequency-domain resource corresponding to the first downlink frequency-domain resource among the multiple uplink frequency-domain resources.

Optionally, the first command is a Query command.

Optionally, the receiving unit 910 is further configured to: receive a second command sent by the second device, where the second command is used to adjust the first slot value.

Optionally, the second command indicates the first uplink frequency-domain resource.

Optionally, the second command is carried on a second downlink frequency-domain resource in multiple downlink frequency-domain resources, and each of the multiple downlink frequency-domain resources is available for carrying a second command corresponding thereto.

Optionally, the second downlink frequency-domain resource is a downlink frequency-domain resource corresponding to the first uplink frequency-domain resource among the multiple downlink frequency-domain resources.

Optionally, the second command is a QueryRep command.

Optionally, the receiving unit 910 is further configured to: receive a third command sent by the second device, where the third command is an ACK command for the second parameter.

Optionally, the third command indicates the first uplink frequency-domain resource and the second parameter.

Optionally, the third command is carried on a third downlink frequency-domain resource in multiple downlink frequency-domain resources, and each of the multiple downlink frequency-domain resources is available for carrying corresponding a third command corresponding thereto.

Optionally, the third downlink frequency-domain resource is a downlink frequency-domain resource corresponding to the first uplink frequency-domain resource among the multiple downlink frequency-domain resources.

Optionally, the third command contains the second parameter.

Optionally, the target parameter is a random number.

Optionally, the first device is an A-IoT terminal.

Optionally, the second device is a network device; or the second device is an intermediate device that is in communicative connection to the network device and the first device.

FIG. 10 illustrates a communication device 1000 is provided in embodiments of the disclosure. The communication device 1000 can be the second device mentioned above. The communication device 1000 can include a sending unit 1010 and a receiving unit 1020. The sending unit 1010 is configured to send a first command to a first device, where the first command contains a first parameter, and the first parameter is used to determine a first slot value. The receiving unit 1020 is configured to receive a second parameter sent by the first device, where the second parameter is a target parameter for accessing the second device, and a transmission time for the second parameter is determined based on the first slot value. The second parameter is carried on a first uplink frequency-domain resource in multiple uplink frequency-domain resources, and each of the multiple uplink frequency-domain resources is available for carrying the target parameter.

Optionally, the first command indicates the first parameter and the first uplink frequency-domain resource.

Optionally, the first parameter is used to determine a transmission time for the target parameter on each of the multiple uplink frequency-domain resources.

Optionally, the first command is carried on a first downlink frequency-domain resource in multiple downlink frequency-domain resources, and each of the multiple downlink frequency-domain resources is available for carrying a first command corresponding thereto.

Optionally, the first uplink frequency-domain resource is an uplink frequency-domain resource corresponding to the first downlink frequency-domain resource among the multiple uplink frequency-domain resources.

Optionally, the first command is a Query command.

Optionally, the sending unit 1010 is further configured to: send a second command to the first device, where the second command is used to adjust the first slot value.

Optionally, the second command indicates the first uplink frequency-domain resource.

Optionally, the second command is carried on a second downlink frequency-domain resource in multiple downlink frequency-domain resources, and each of the multiple downlink frequency-domain resources is available for carrying a second command corresponding thereto.

Optionally, the second downlink frequency-domain resource is a downlink frequency-domain resource corresponding to the first uplink frequency-domain resource among the multiple downlink frequency-domain resources.

Optionally, the second command is a QueryRep command.

Optionally, the sending unit 1010 is further configured to: send a third command to the first device, where the third command is an ACK command for the second parameter.

Optionally, the third command indicates the first uplink frequency-domain resource and the second parameter.

Optionally, the third command is carried on a third downlink frequency-domain resource in multiple downlink frequency-domain resources, and each of the multiple downlink frequency-domain resources is available for carrying corresponding a third command corresponding thereto.

Optionally, the third downlink frequency-domain resource is a downlink frequency-domain resource corresponding to the first uplink frequency-domain resource among the multiple downlink frequency-domain resources.

Optionally, the third command contains the second parameter.

Optionally, the target parameter is a random number.

Optionally, the first device is an A-IoT terminal.

Optionally, the second device is a network device; or the second device is an intermediate device that is in communicative connection to the network device and the first device.

FIG. 11 is a schematic structural diagram of a communication apparatus to which embodiments of the disclosure can be applied. Dotted lines in FIG. 11 indicate that the corresponding unit or module is optional. The apparatus 1100 can be used to implement the method described in the foregoing method embodiments. The apparatus 1100 can be a chip or a communication device.

The apparatus 1100 can include one or more processors 1110. The processor 1110 can support the apparatus 1100 in implementing the method described in the foregoing method embodiments. The processor 1110 can be a general-purpose processor or a dedicated processor. For example, the processor can be a central processing unit (CPU). Alternatively, the processor may be other general-purpose processors, a digital signal processor (DSP), an application specific integrated circuit (ASIC), a field programmable gate array (FPGA), or other programmable logic devices, discrete gates or transistor logic devices, discrete hardware components. The general-purpose processor may be a microprocessor, or the processor may be any conventional processor or the like.

The apparatus 1100 can further include one or more memories 1120. The memory 1120 is configured to store programs that can be executed by the processor 1110 and are operable with the processor 1110 to perform the method described in the foregoing method embodiments. The memory 1120 can be independent of the processor 1110 or integrated into the processor 1110.

The apparatus 1100 can further include a transceiver 1130. The processor 1110 can communicate with other devices or chips via the transceiver 1130. For example, the processor 1110 can transmit and receive data with other devices or chips via the transceiver 1130.

Embodiments of the disclosure further provide a computer-readable storage medium for storing programs. The computer-readable storage medium can be applied to the first network element, the application function network element, or the first communication device provided in embodiments of the disclosure. The programs cause a computer to perform the method performed by the first network element, the method performed by the application function network element, or the method performed by the first communication device in various embodiments of the disclosure.

Embodiments of the disclosure further provide a computer program product. The computer program product includes programs. The computer program product can be applied to the first network element, the application function network element, or the first communication device provided in embodiments of the disclosure, and the programs cause a computer to perform the method performed by the first network element, the method performed by the application function network element, or the method performed by the first communication device in various embodiments of the disclosure.

Embodiments of the disclosure further provide a computer program. The computer program can be applied to the first network element, the application function network element, or the first communication device provided in embodiments of the disclosure, and the computer program causes a computer to perform the method performed by the first network element, the method performed by the application function network element, or the method performed by the first communication device in various embodiments of the disclosure.

It should be understood that, the terms "system" and "network" herein are usually used interchangeably throughout this disclosure. In addition, terms used in the disclosure are merely intended for explaining embodiments of the disclosure rather than limiting the disclosure. The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover nonexclusive inclusion.

"Indication" referred to in embodiments of the disclosure may be a direct indication, may be an indirect indication, or may mean that there is an association relationship. For example, *A* indicates *B* may mean that *A* directly indicates *B*, for instance, *B* can be obtained according to *A*; may mean that *A* indirectly indicates *B*, for instance, *A* indicates *C*, and *B* can be obtained according to *C*; or may mean that that there is an association relationship between *A* and *B*.

In embodiments of the disclosure, "*B* corresponding to *A*" indicates that *B* is associated with *A*, and *B* may be determined according to A. However, it should be further understood that, "determine *B* according to *A*" does not mean that *B* is determined according to *A* only, and *B* may also be determined according to *A* and/or other information.

In embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

The term "and/or" in embodiments of the disclosure only describes an association relationship between associated objects, which means that there can be three relationships. For example, A and/or B can mean A alone, both A and B exist, and B alone. In addition, the character "/" herein generally indicates that the associated objects are in an "or" relationship.

In various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be appreciated that the systems, the apparatuses, and the methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface or module, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
receiving, by a first device, a first command sent by a second device, wherein the first command contains a first parameter, and the first parameter is used to determine a first slot value; and
sending, by the first device, a second parameter to the second device, wherein the second parameter is a target parameter for accessing the second device, and a transmission time for the second parameter is determined based on the first slot value;
wherein the second parameter is carried on a first uplink frequency-domain resource in a plurality of uplink frequency-domain resources, and each of the plurality of uplink frequency-domain resources is available for carrying the target parameter.

2. The method of claim 1, wherein the first command indicates the first parameter and the first uplink frequency-domain resource.

3. The method of claim 1, wherein the first parameter is used to determine a transmission time for the target parameter on each of the plurality of uplink frequency-domain resources.

4. The method of claim 1, wherein the first command is carried on a first downlink frequency-domain resource in a plurality of downlink frequency-domain resources, and each of the plurality of downlink frequency-domain resources is available for carrying a first command corresponding thereto.

5. The method of claim 4, wherein the first uplink frequency-domain resource is an uplink frequency-domain resource corresponding to the first downlink frequency-domain resource among the plurality of uplink frequency-domain resources.

6. The method of any of claims 2 to 5, wherein the first command is a Query command.

7. The method of any of claims 1 to 6, further comprising:
receiving, by the first device, a second command sent by the second device, wherein the second command is used to adjust the first slot value.

8. The method of claim 7, wherein the second command indicates the first uplink frequency-domain resource.

9. The method of claim 7, wherein the second command is carried on a second downlink frequency-domain resource in a plurality of downlink frequency-domain resources, and each of the plurality of downlink frequency-domain resources is available for carrying a second command corresponding thereto.

10. The method of claim 9, wherein the second downlink frequency-domain resource is a downlink frequency-domain resource corresponding to the first uplink frequency-domain resource among the plurality of downlink frequency-domain resources.

11. The method of any of claims 7 to 10, wherein the second command is a query repeat (QueryRep) command.

12. The method of any of claims 1 to 11, further comprising:
receiving, by the first device, a third command sent by the second device, wherein the third command is an acknowledgement (ACK) command for the second parameter.

13. The method of claim 12, wherein the third command indicates the first uplink frequency-domain resource and the second parameter.

14. The method of claim 12, wherein the third command is carried on a third downlink frequency-domain resource in a plurality of downlink frequency-domain resources, and each of the plurality of downlink frequency-domain resources is available for carrying corresponding a third command corresponding thereto.

15. The method of claim 14, wherein the third downlink frequency-domain resource is a downlink frequency-domain resource corresponding to the first uplink frequency-domain resource among the plurality of downlink frequency-domain resources.

16. The method of any of claims 12 to 15, wherein the third command contains the second parameter.

17. The method of any of claims 1 to 16, wherein the target parameter is a random number.

18. The method of any of claims 1 to 17, wherein the first device is an ambient Internet of things (A-IoT) terminal.

19. The method of any of claims 1 to 18, wherein the second device is a network device; or the second device is an intermediate device that is in communicative connection to the network device and the first device.

20. A wireless communication method, comprising:
sending, by a second device, a first command to a first device, wherein the first command contains a first parameter, and the first parameter is used to determine a first slot value; and
receiving, by the second device, a second parameter sent by the first device, wherein the second parameter is a target parameter for accessing the second device, and a transmission time for the second parameter is determined based on the first slot value;
wherein the second parameter is carried on a first uplink frequency-domain resource in a plurality of uplink frequency-domain resources, and each of the plurality of uplink frequency-domain resources is available for carrying the target parameter.

21. The method of claim 20, wherein the first command indicates the first parameter and the first uplink frequency-domain resource.

22. The method of claim 20, wherein the first parameter is used to determine a transmission time for the target parameter on each of the plurality of uplink frequency-domain resources.

23. The method of claim 20, wherein the first command is carried on a first downlink frequency-domain resource in a plurality of downlink frequency-domain resources, and each of the plurality of downlink frequency-domain resources is available for carrying a first command corresponding thereto.

24. The method of claim 23, wherein the first uplink frequency-domain resource is an uplink frequency-domain resource corresponding to the first downlink frequency-domain resource among the plurality of uplink frequency-domain resources.

25. The method of any of claims 21 to 24, wherein the first command is a Query command.

26. The method of any of claims 20 to 25, further comprising:
sending, by the second device, a second command to the first device, wherein the second command is used to adjust the first slot value.

27. The method of claim 26, wherein the second command indicates the first uplink frequency-domain resource.

28. The method of claim 26, wherein the second command is carried on a second downlink frequency-domain resource in a plurality of downlink frequency-domain resources, and each of the plurality of downlink frequency-domain resources is available for carrying a second command corresponding thereto.

29. The method of claim 28, wherein the second downlink frequency-domain resource is a downlink frequency-domain resource corresponding to the first uplink frequency-domain resource among the plurality of downlink frequency-domain resources.

30. The method of any of claims 26 to 29, wherein the second command is a query repeat (QueryRep) command.

31. The method of any of claims 20 to 30, further comprising:
sending, by the second device, a third command to the first device, wherein the third command is an acknowledgement (ACK) command for the second parameter.

32. The method of claim 31, wherein the third command indicates the first uplink frequency-domain resource and the second parameter.

33. The method of claim 31, wherein the third command is carried on a third downlink frequency-domain resource in a plurality of downlink frequency-domain resources, and each of the plurality of downlink frequency-domain resources is available for carrying corresponding a third command corresponding thereto.

34. The method of claim 33, wherein the third downlink frequency-domain resource is a downlink frequency-domain resource corresponding to the first uplink frequency-domain resource among the plurality of downlink frequency-domain resources.

35. The method of any of claims 31 to 34, wherein the third command contains the second parameter.

36. The method of any of claims 20 to 25, wherein the target parameter is a random number.

37. The method of any of claims 20 to 26, wherein the first device is an ambient Internet of things (A-IoT) terminal.

38. The method of any of claims 20 to 37, wherein the second device is a network device; or the second device is an intermediate device that is in communicative connection to the network device and the first device.

39. A communication device, being a first device and comprising:
a receiving unit configured to receive a first command sent by a second device, wherein the first command contains a first parameter, and the first parameter is used to determine a first slot value; and
a sending unit configured to send a second parameter to the second device, wherein the second parameter is a target parameter for accessing the second device, and a transmission time for the second parameter is determined based on the first slot value;
wherein the second parameter is carried on a first uplink frequency-domain resource in a plurality of uplink frequency-domain resources, and each of the plurality of uplink frequency-domain resources is available for carrying the target parameter.

40. The communication device of claim 39, wherein the first command indicates the first parameter and the first uplink frequency-domain resource.

41. The communication device of claim 39, wherein the first parameter is used to determine a transmission time for the target parameter on each of the plurality of uplink frequency-domain resources.

42. The communication device of claim 39, wherein the first command is carried on a first downlink frequency-domain resource in a plurality of downlink frequency-domain resources, and each of the plurality of downlink frequency-domain resources is available for carrying a first command corresponding thereto.

43. The communication device of claim 42, wherein the first uplink frequency-domain resource is an uplink frequency-domain resource corresponding to the first downlink frequency-domain resource among the plurality of uplink frequency-domain resources.

44. The communication device of any of claims 40 to 43, wherein the first command is a Query command.

45. The communication device of any of claims 39 to 44, wherein the receiving unit is further configured to:
receive a second command sent by the second device, wherein the second command is used to adjust the first slot value.

46. The communication device of claim 45, wherein the second command indicates the first uplink frequency-domain resource.

47. The communication device of claim 45, wherein the second command is carried on a second downlink frequency-domain resource in a plurality of downlink frequency-domain resources, and each of the plurality of downlink frequency-domain resources is available for carrying a second command corresponding thereto.

48. The communication device of claim 47, wherein the second downlink frequency-domain resource is a downlink frequency-domain resource corresponding to the first uplink frequency-domain resource among the plurality of downlink frequency-domain resources.

49. The communication device of any of claims 45 to 48, wherein the second command is a query repeat (QueryRep) command.

50. The communication device of any of claims 39 to 49, wherein the receiving unit is further configured to:
receive a third command sent by the second device, wherein the third command is an acknowledgement (ACK) command for the second parameter.

51. The communication device of claim 50, wherein the third command indicates the first uplink frequency-domain resource and the second parameter.

52. The communication device of claim 50, wherein the third command is carried on a third downlink frequency-domain resource in a plurality of downlink frequency-domain resources, and each of the plurality of downlink frequency-domain resources is available for carrying corresponding a third command corresponding thereto.

53. The communication device of claim 52, wherein the third downlink frequency-domain resource is a downlink frequency-domain resource corresponding to the first uplink frequency-domain resource among the plurality of downlink frequency-domain resources.

54. The communication device of any of claims 50 to 53, wherein the third command contains the second parameter.

55. The communication device of any of claims 39 to 54, wherein the target parameter is a random number.

56. The communication device of any of claims 39 to 55, wherein the first device is an ambient Internet of things (A-IoT) terminal.

57. The communication device of any of claims 39 to 56, wherein the second device is a network device; or the second device is an intermediate device that is in communicative connection to the network device and the first device.

58. A communication device, being a second device and comprising:
a sending unit configured to send a first command to a first device, wherein the first command contains a first parameter, and the first parameter is used to determine a first slot value; and
a receiving unit configured to receive a second parameter sent by the first device, wherein the second parameter is a target parameter for accessing the second device, and a transmission time for the second parameter is determined based on the first slot value;
wherein the second parameter is carried on a first uplink frequency-domain resource in a plurality of uplink frequency-domain resources, and each of the plurality of uplink frequency-domain resources is available for carrying the target parameter.

59. The communication device of claim 58, wherein the first command indicates the first parameter and the first uplink frequency-domain resource.

60. The communication device of claim 58, wherein the first parameter is used to determine a transmission time for the target parameter on each of the plurality of uplink frequency-domain resources.

61. The communication device of claim 58, wherein the first command is carried on a first downlink frequency-domain resource in a plurality of downlink frequency-domain resources, and each of the plurality of downlink frequency-domain resources is available for carrying a first command corresponding thereto.

62. The communication device of claim 61, wherein the first uplink frequency-domain resource is an uplink frequency-domain resource corresponding to the first downlink frequency-domain resource among the plurality of uplink frequency-domain resources.

63. The communication device of any of claims 59 to 62, wherein the first command is a Query command.

64. The communication device of any of claims 58 to 63, wherein the sending unit is further configured to:
send a second command to the first device, wherein the second command is used to adjust the first slot value.

65. The communication device of claim 64, wherein the second command indicates the first uplink frequency-domain resource.

66. The communication device of claim 64, wherein the second command is carried on a second downlink frequency-domain resource in a plurality of downlink frequency-domain resources, and each of the plurality of downlink frequency-domain resources is available for carrying a second command corresponding thereto.

67. The communication device of claim 66, wherein the second downlink frequency-domain resource is a downlink frequency-domain resource corresponding to the first uplink frequency-domain resource among the plurality of downlink frequency-domain resources.

68. The communication device of any of claims 64 to 67, wherein the second command is a query repeat (QueryRep) command.

69. The communication device of any of claims 58 to 68, wherein the sending unit is further configured to:
send a third command to the first device, wherein the third command is an acknowledgement (ACK) command for the second parameter.

70. The communication device of claim 69, wherein the third command indicates the first uplink frequency-domain resource and the second parameter.

71. The communication device of claim 69, wherein the third command is carried on a third downlink frequency-domain resource in a plurality of downlink frequency-domain resources, and each of the plurality of downlink frequency-domain resources is available for carrying corresponding a third command corresponding thereto.

72. The communication device of claim 71, wherein the third downlink frequency-domain resource is a downlink frequency-domain resource corresponding to the first uplink frequency-domain resource among the plurality of downlink frequency-domain resources.

73. The communication device of any of claims 69 to 72, wherein the third command contains the second parameter.

74. The communication device of any of claims 58 to 73, wherein the target parameter is a random number.

75. The communication device of any of claims 58 to 74, wherein the first device is an ambient Internet of things (A-IoT) terminal.

76. The communication device of any of claims 58 to 75, wherein the second device is a network device; or the second device is an intermediate device that is in communicative connection to the network device and the first device.

77. A communication device, comprising:
a memory configured to store programs; and
a processor configured to invoke the programs from the memory, to perform the method of any of claims 1 to 19 or 20 to 38.

78. An apparatus, comprising:
a processor configured to invoke programs from a memory, to perform the method of any of claims 1 to 19 or 20 to 38.

79. A chip, comprising:
a processor configured to invoke programs from a memory, to cause a device equipped with the chip to perform the method of any of claims 1 to 19 or 20 to 38.

80. A computer-readable storage medium, configured to store programs which are operable with a computer to perform the method of any of claims 1 to 19 or 20 to 38.

81. A computer program product, comprising programs which are operable with a computer to perform the method of any of claims 1 to 19 or 20 to 38.

82. A computer program, operable with a computer to perform the method of any of claims 1 to 19 or 20 to 38.
